# EUROPEAN PATENT APPLICATION

(11) **EP 1 457 796 A1**
(43) Date of publication of application: **15.09.2004**
(21) Application number: 04005250.8
(22) Date of filing: 05.03.2004
(51) Int. Cl.: G02B 6/34, H04B 10/18

(54) **Wavelength dispersion compensator and optical transmission apparatus**

(30) Priority: 11.03.2003 JP 2003065596
(71) Applicant: FUJITSU LIMITED, Kawasaki-shi, Kanagawa 211-8588 (JP)
(72) Inventor: Kawahata, Yuichi, Kawasaki-shi Kanagawa 211-8588 (JP)
(74) Representative: Kreutzer, Ulrich, Dipl.-Phys.

(57) **Abstract**

Light output from a single-mode fiber is output as parallel light from a two-core collimator, and input to a deflection prism. The parallel light output from the deflection prism is vertically input to an area approximately half that of a plane side of a line focus lens, passes through approximately half of the areas of the line focus lens, a VIPA element, and a light-gathering lens, and is illuminated on a free-form surface mirror, so that its wavelength dispersion is compensated. The light then passes through the remaining areas of the light-gathering lens, the VIPA element, the line focus lens, and the deflection prism, through which the light from the single-mode fiber does not pass through, and is input to the two-core collimator as parallel light. The parallel light input to the two-core collimator is converged by a collimate lens, and input to another single-mode fiber.

## Description

### Background of the Invention

### Field of the Invention

The present invention relates to an optical communications technology, and more particularly, to a wavelength dispersion compensation technology for correcting wavelength dispersion which occurs when an optical signal is transmitted over an optical fiber, and for restoring the signal to the original optical signal.

### Description of the Related Art

For the above described technology, by way of example, there are a VIPA (Virtually Imaged Phased Array) element which is disclosed by the specification of United States Patent No. 6, 028, 706 and is implemented by coating a reflection film on both sides of a parallel plate having light transmittance, and a wavelength dispersion compensator, which is disclosed by Japanese Patent Publication No. 2001-305338 and uses an optical dispersion compensating element formed by combining layers having different refractive indices.

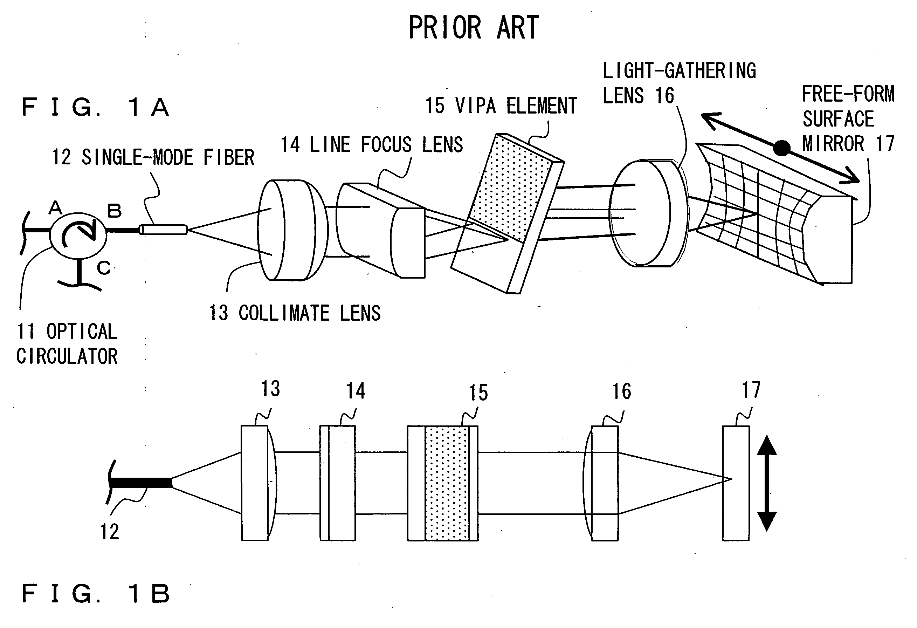

Here, configuration of a conventional wavelength dispersion compensator using a VIPA element is described with reference to Figs. 1A and 1B. Fig. 1A is a perspective view showing the configuration of the conventional wavelength dispersion compensator, whereas Fig. 1B is a top view showing the configuration shown in Fig. 1A, from which an optical circulator 11 is eliminated, when viewed from above.

In Figs. 1A and 1B, the optical circulator 11 comprises three ports. Light input to a port A is output from a port B, and light input from the port B is output from a port C.

One end of a single-mode fiber 12 is connected to the port B of the optical circulator 11, and the other is arranged at a focus of a collimate lens 13. Namely, light output from the port B of the optical circulator 11 is emitted to the collimate lens 13 via the single-mode fiber 12, and light converged by the collimate lens 13 is input to the port B of the optical circulator 11 via the single-mode fiber 12.

The collimate lens 13 converts diverged light input from the single-mode fiber 12 into parallel light, and inputs the parallel light to a line focus lens 14. Or, the collimate lens 13 converges parallel light input from the line focus lens 14, and inputs the converged light to the single-mode fiber 12.

The line focus lens 14 is a plano-convex cylindrical lens, and converges parallel light input from the collimate lens 13 to a linear state on a plane of a VIPA element 15. Or, the line focus lens 14 converts diverged light emitted from a linear line on the plane of the VIPA element 15 into parallel light, and inputs the parallel light to the collimate lens 13.

After the light, which is converged to the linear state by the line focus lens 14, is input to a first plane, the VIPA element 15 causes the light to be multireflected inside the VIPA element 15 itself, and outputs a light pencil, which is parallel light, from a second plane being the back side of the VIPA element 15. However, the action of the multireflection which occurs inside the VIPA element 15 varies the output angle of the light pencil depending on the wavelength of the light (angular dispersion). Or, if a parallel light pencil having a different wavelength is input from the side of the second plane of the VIPA element 15 at an angle according to the wavelength, uniformly diverged light is emitted from the linear line on the first plane of the VIPA element 15 regardless of the wavelength.

A light-gathering lens 16 converges the light pencil output from the second plane of the VIPA element 15, illuminates the light pencil on a free-form surface mirror 17, and inputs the light reflected by the free-form surface mirror 17 to the second plane of the VIPA element 15 as a light pencil according to the wavelength of the light. A position of the focus when the light pencil is converged on the surface of the free-form surface mirror 17 by the light-gathering lens 16 may vary by the input angle, namely, the wavelength of the light pencil input from the VIPA element 15 to the light-gathering lens 16.

The free-form surface mirror 17 is a mirror which reflects the light converged by the light-gathering lens 16 on the light-gathering lens 16. The free-form surface mirror 17 has a shape in its central portion, which gives approximately constant wavelength dispersion regardless of the wavelength of light, and also has a shape that gradually gives different wavelength dispersion depending on a position in a direction (directions respectively indicated by arrows in Figs. 1A and 1B) substantially vertical to the direction of the angular dispersion of the VIPA element 15. Accordingly, the free-form surface mirror 17 is positioned to obtain a reverse characteristic of wavelength dispersion which occurs in light input to the port A of the optical circulator 11 by being moved in the directions indicated by the arrows in Figs. 1A and 1b, so that the light whose wavelength dispersion is compensated is output from the port C of the optical circulator 11.

The conventional wavelength dispersion compensator using a VIPA element is configured as described above, and implemented as a wavelength dispersion compensator of a variable type, which can provide a different compensation characteristic by moving the position of the free-form surface mirror 17 in the direction (directions respectively indicated by the arrows in Figs. 1A and 1B) substantially vertical to the direction of the angular dispersion of the VIPA element 15.

Details of such a wavelength dispersion compensator using a VIPA element are disclosed, for example, by Japanese Patent Publication No. 2002-258207.

For the configuration of the above described conventional wavelength dispersion compensator, the optical circulator 11 for separating input and output lights is required. Therefore, an insertion loss of the optical circulator 11 occurs, and the insertion of the optical circulator 11 becomes one of factors which increase the cost of the entire wavelength dispersion compensator. Additionally, the input/output direction of light is restricted to one direction due to the use of the optical circulator 11. Accordingly, for example, if a bidirectional communication is made with a single optical fiber, one circuit as a wavelength dispersion compensator must be provided respectively for upstream and downstream signals, which causes troublesomeness.

Also the wavelength dispersion compensator, which is disclosed by Japanese Patent publication No. 2001-3053383 and uses an optical dispersion compensating element formed by combining layers having different refractive indices, requires an optical circulator. Therefore, this compensator encounters a problem similar to the above described one.

### Summary of the Invention

An object of the present invention is to provide a wavelength dispersion compensator which does not require an optical circulator.

A wavelength dispersion compensator, which is one preferred embodiment of the present invention, is configured to comprise: a wavelength dispersion compensating unit making compensation for a wavelength dispersion characteristic of signal light, which is input parallel light, and outputting as parallel light the signal light after the compensation from an output path, which is a path different from an input path of the signal light; a collimating unit, which comprises at least two optical input/output paths, converting signal light input from each of the optical input/output paths into parallel light, and outputting the parallel light; and a light deflecting unit deflecting a proceeding direction of signal light, which is input to a first optical input/output path comprised by the collimating unit and converted into parallel light by the collimating unit, and inputting the signal light to the wavelength dispersion compensating unit, and also deflecting a proceeding direction of the signal light after the compensation, which is the parallel light output from the wavelength dispersion compensating unit, inputting the signal light after the compensation to the collimating unit, and causing the signal light after the compensation to be output from a second optical input/output path comprised by the collimating unit.

Here, the light deflecting unit may be an integrally formed deflection prism.

With the above described configuration, a path of signal light before a wavelength dispersion characteristic is compensated, and that of the signal light after the wavelength dispersion characteristic is compensated differ within the wavelength dispersion compensator. Therefore, input and output lights can be separated without using an expensive optical circulator, which eliminates a loss caused by the optical circulator.

In the above described wavelength dispersion compensator according to the present invention, the wavelength dispersion compensating unit may comprise: a line focus lens converging parallel light to a linear state; an optical element outputting light at a different output angle depending on a wavelength of light, if light, which is converged to a linear state by being input to first and second reflection films and by being multireflected with light from the line focus lens between the first and the second reflection films, is input; a light-gathering lens gathering light output from the optical element; and a free-form surface mirror on which a light reflection surface is formed to give different wavelength dispersion depending on an input angle of the light to the light, when the light gathered by the light-gathering lens is reflected.

This configuration uses the above described wavelength dispersion compensator using a VIPA element as the wavelength dispersion compensating unit.

This configuration may further comprise a mirror position moving unit moving the position of the above described free-form surface mirror, and the reflection surface of the free-form surface mirror may be formed so that wavelength dispersion, which is given when the light gathered by the above described light-gathering lens is reflected, changes when the position of the free-form surface mirror is moved by the mirror position moving unit.

With this configuration, a wavelength dispersion compensator which can vary the compensation characteristic of wavelength dispersion of input signal light can be provided.

Additionally, the above described wavelength dispersion compensator according to the present invention may be configured so that the above described wavelength dispersion compensating unit outputs, as parallel light, the signal light after the above described compensation from the input path if the signal light, which is the parallel light, is input from the output path, and the above described light deflecting unit deflects the proceeding direction of signal light, which is the signal light input to the second optical input/output path comprised by the collimating unit and converted into parallel light by the collimating unit, and inputs the signal light to the output path of the wavelength dispersion compensating unit, and also deflects the proceeding direction of the signal light after the compensation, which is parallel light output from the input path of the wavelength dispersion compensating unit, inputs the signal light after the compensation to the collimating unit, and causes the signal light after the compensation to be output from the first optical input/output path comprised by the collimating unit.

With such a configuration, compensation of the wavelength dispersion characteristic of light in the case where a bidirectional communication is made over a single optical fiber only with one circuit as a wavelength dispersion compensator can be made bidirectionally.

Also an optical transmission apparatus transmitting an optical signal over an optical transmission line, in which the wavelength dispersion compensator according to the present invention is provided on a transmission path of the optical signal, achieves operations/effects similar to those of the wavelength dispersion compensator according to the present invention.

### Brief Description of the Drawings

The present invention will be more apparent from the following detailed description when the accompanying drawings are referenced.
Fig. 1A is a perspective view showing the configuration of a conventional wavelength dispersion compensator;
Fig. 1B is a top view showing the configuration of the wavelength dispersion compensator shown in Fig. 1, from which an optical circulator is eliminated, when viewed from above;
Fig. 2A is a perspective view showing the configuration of a wavelength dispersion compensator implementing the present invention; and
Fig. 2B is a top view showing the configuration of the wavelength dispersion compensator shown in Fig. 2A when viewed from above.

### Description of the Preferred Embodiments

Hereinafter, a preferred embodiment according to the present invention is described with reference to the drawings.

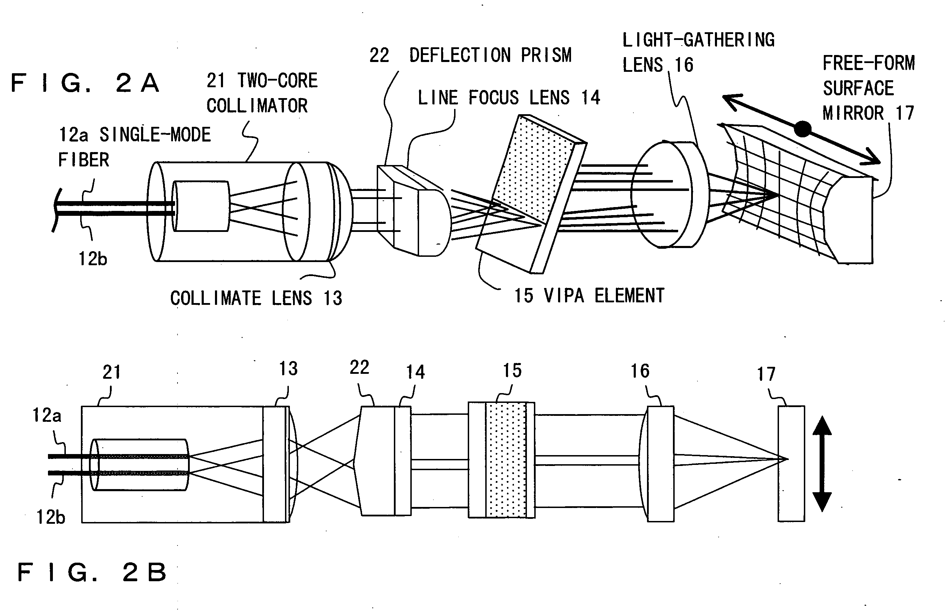

Figs. 2A and 2B show the configuration of a wavelength dispersion compensator that implements the present invention, and is a wavelength dispersion compensator of a variable type making compensation for wavelength dispersion by using a VIPA element. This wavelength dispersion compensator is used, for example, in an optical transmission apparatus transmitting an optical signal over an optical transmission line such as an optical fiber, etc., in an optical transmission network.

Fig. 2A is a perspective view showing the configuration of the wavelength dispersion compensator, whereas Fig. 2B is a top view showing the configuration shown in Fig. 2A when viewed from above.

As is proved from a comparison made with 1A and 1B, for the wavelength dispersion compensator which is shown in Figs. 2A and 2B and implements the present invention, a big difference exists in a point that the optical circulator 11 is eliminated from the conventional configuration shown in Figs. 1A and 1B, and a two-core collimator 21 and a deflection prism 22 are provided instead.

In Figs. 2A and 2B, two single-mode fibers 12a and 12b are connected to the two-core collimator 21, and arranged in parallel, for example, apart by 1000µm within the two-core collimator 21. The two-core collimator 21 outputs light transmitted over the single-mode fiber 12a or 12b as parallel light with a collimate lens 13 comprised within the two-core collimator 21. Here, the end of the single mode fiber 12a is arranged in a position (position slightly shifted upward from the position of the focus in Fig. 2B), which is slightly shifted from the position of the focus of the collimate lens 13 in a direction horizontal to the proceeding direction of light. Therefore, the parallel light output from the collimate lens 13 proceeds in a direction slightly inclined from the vertical direction of the collimate lens 13.

The deflection prism 22 is arranged in a position, for example, apart 700 mm from the collimate lens 13, deflects the proceeding direction of light from the single-mode fiber 12a, which is output from the two-core collimator 21, and vertically inputs the deflected parallel light to an area (a lower half of the area of the line focus lens 14 in Fig. 2B) of approximately half the side of the flat plane of the line focus lens 14, which is a plano-convex cylindrical lens.

All of the line focus lens 14, the VIPA element 15, the light-gathering lens 16, and the free-form surface mirror 17 are similar to those used in the conventional wavelength dispersion compensator shown in Figs. 1A and 1B.

State where wavelength dispersion of light is compensated by the configuration shown in Figs. 2A and 2B is described next.

Here, light transmitted over the single-mode fiber 12a is output as parallel light from the two-core collimator 21. If this parallel light is input to the deflection prism 22, the parallel light output from the deflection prism 22 is vertically input to approximately half the area of the flat surface side of the line focus lens 14. The line focus lens 14 converges the parallel light to a linear state in an area (a lower half of the area on the first plane of the VIPA element 15 in Fig. 2B) approximately half that of the first plane of the VIPA element 15.

The light input to the first plane of the VIPA element 15 is multirelfected inside the VIPA element 15 as described above, output from an area (a lower half of the area of a second plane of the VIPA element 15 in Fig. 2B) approximately half that of the second plane, which is the back side, at a different output angle depending on the wavelength of light, and input to an area (a lower half of the area of the light-gathering lens 16 in Fig. 2B) approximately half that of the light-gathering lens 16.

The light-gathering lens 16 converges the input light, and illuminates the light on the free-form surface mirror 17. This light is then reflected on the free-form surface mirror 17, so that wavelength dispersion, which occurs in the light, is compensated. The light is then returned to the rest of the area (an upper half of the area of the light-gathering lens 16) through which the light from the single-mode fiber 12a does not pass in the light-gathering lens 16.

The light which passes through the rest of the area of the light-gathering lens 16 thereafter passes through the rest of the areas (upper halves of the areas of the VIPA element 15, the line focus lens 14, and the deflection prism 22 in Fig. 2B) of the VIPA element 15, the line focus lens 14, and the deflection prism 22, through which the light from the single-mode fiber 12a does not pass, and is input to the two-core collimator 21 as parallel light. Note that the angle at which the parallel light is input to the two-core collimator 21 at this time is a direction slightly inclined from the vertical direction of the collimate lens 13.

Thereafter, the parallel light input to the two-core collimator 21 is converged by the collimate lens 13, and input to the single-mode fiber 12b the end of which is arranged in a position (position slightly shifted downward from the position of the focus in Fig. 2B) slightly shifted from the position of the focus of the collimate lens 13 in a direction horizontal to the proceeding direction of light.

As described above, light transmitted over the single-mode fiber 12a is output to the single-mode fiber 12b after its wavelength dispersion characteristic is compensated. As a result, the optical circulator 211, which is essential to the conventional wavelength dispersion compensator shown in Figs. 1A and 1B, is eliminated, whereby an insertion loss of approximately 1.0 dB (approximately 0.5 dB x 2) caused by light, which goes by and returns to the optical circulator 11 twice in total, is improved.

In this preferred embodiment, deflection of the proceeding direction of light from the single-mode fiber 12a, and deflection for inputting the light from the line focus lens 14 to the single-mode fiber 12b are made with the integrally formed deflection prism 22. However, these deflections may be made with a deflection prism formed as a separate body. Or, the deflection prism 22 and the line focus lens 14 may be integrally formed.

In the meantime, as is evident from a consideration of the symmetry of input and output of the configuration shown in Figs. 2A and 2B, the wavelength dispersion compensator according to the present invention can also compensate for the wavelength dispersion characteristic of light transmitted over the single-mode fiber 12b, and can output the light to the single-mode fiber 12a. Namely, this wavelength dispersion compensator can make bidirectional compensation for the wavelength dispersion characteristic of light when a bidirectional communication is made over a single optical fiber only with one circuit.

As described above in detail, the wavelength dispersion compensator according to the present invention is configured to comprise: a wavelength dispersion compensating unit making compensation for a wavelength dispersion characteristic of signal light, which is input parallel light, and outputting as parallel light the signal light after the compensation from an output path, which is a path different from an input path of the signal light; a collimating unit, which comprises at least two optical input/output paths, converting signal light input from each of the optical input/output paths into parallel light, and outputting the parallel light; and a light deflecting unit deflecting a proceeding direction of signal light, which is input to a first optical input/output path comprised by the collimating unit and converted into parallel light by the collimating unit, and inputting the signal light to the wavelength dispersion compensating unit, and also deflecting a proceeding direction of the signal light after the compensation, which is the parallel light output from the wavelength dispersion compensating unit, inputting the signal light after the compensation to the collimating unit, and causing the signal light after the compensation to be output from a second optical input/output path comprised by the collimating unit, thereby achieving an effect that a wavelength dispersion compensator which does not require an expensive optical circulator can be provided.

## Claims

1. A wavelength dispersion compensator, comprising:
wavelength dispersion compensating means (14, 15, 16, 17) for making compensation for a wavelength dispersion characteristic of signal light, which is input parallel light, and for outputting the signal light after the compensation as parallel light from an output path, which is a path different from an input path of the signal light;
collimating means (21), which comprises at least two optical input/output paths (12a,12b), for converting signal light input from each of the optical input/output paths (12a,12b) into parallel light, and for outputting the parallel light; and
light deflecting means (22) for deflecting a proceeding direction of signal light, which is input to a first optical input/output path (12a) comprised by said collimating means (21) and converted into parallel light by said collimating means (21), and for inputting the signal light to said wavelength dispersion compensating means (14,15,16,17), and for also deflecting a proceeding direction of the signal light, which is the parallel light output from said wavelength dispersion compensating means (14,15,16,17) and for which the compensation is made, for inputting the signal light for which the compensation is made to said collimating means (21), and for causing the signal light for which the compensation is made to be output from a second optical input/output path (12b) comprised by said collimating means (21).

2. The wavelength dispersion compensator according to claim 1, wherein
said light deflecting means (22) is an integrally formed deflection prism.

3. The wavelength dispersion compensator according to claim 1, wherein
said wavelength dispersion compensating means (14,15,16,17) comprises
a line focus lens (14) converging parallel light to a linear state,
an optical element (15) outputting light at a different output angle depending on a wavelength of light, if light, which is converged to a linear state by being input to first and second reflection films and by being multireflected with light from said line focus lens (14) between the first and the second reflection films, is input,
a light-gathering lens (16) gathering light output from said optical element (15), and
a free-form surface mirror (17) whose light reflection surface is formed to give different wavelength dispersion to the light according to an input angle of the light, when the light gathered by said light-gathering lens (16) is reflected.

4. The wavelength dispersion compensator according to claim 3, further comprising
mirror position moving means for moving a position of said free-form surface mirror (17), wherein
the reflection surface of said free-form surface mirror (17) is formed so that wavelength dispersion, which is given when the light gathered by said light-gathering lens (16) is reflected, changes when the position of said free-form surface mirror (17) is moved by said mirror position moving means.

5. The wavelength dispersion compensator according to claim 1, wherein:
said wavelength dispersion compensating means (14,15,16,17) outputs the signal light after the compensation as parallel light from the input path, when the signal light, which is parallel light, is input from the output path; and
said light deflecting means (22) deflects a proceeding direction of a signal light, which is the signal light input to the second optical input/output path (12b) comprised by said collimating means (21) and converted into parallel light by said collimating means (21), and inputs the signal light to the output path of said wavelength dispersion compensating means (14, 15, 16, 17), and also deflects a proceeding direction of the signal light, which is the parallel light output from the input path of said wavelength dispersion compensating means (14,15,16,17) and for which the compensation is made, inputs the signal light for which the compensation is made to said collimating means (21), and causes the signal light for which the compensation is made to be output from the first optical input/output path (12a) comprised by said collimating means (21).

6. An optical transmission apparatus having a wavelength dispersion compensator, and transmitting an optical signal over an optical transmission line, wherein
the wavelength dispersion compensator comprises wavelength dispersion compensating means (14, 15, 16, 17) for making compensation for a wavelength dispersion characteristic of signal light, which is input parallel light, and for outputting the signal light after the compensation as parallel light from an output path, which is a path different from an input path of the signal light;
collimating means (21), which comprises at least two optical input/output paths (12a,12b), for converting signal light input from each of the optical input/output paths (12a,12b) into parallel light, and for outputting the parallel light; and
light deflecting means (22) for deflecting a proceeding direction of signal light, which is input to a first optical input/output path (12a) comprised by said collimating means (21) and converted into parallel light by said collimating means (21), and for inputting the signal light to said wavelength dispersion compensating means (14,15,16,17), and for also deflecting a proceeding direction of the signal light, which is the parallel light output from said wavelength dispersion compensating means (14,15,16,17) and for which the compensation is made, for inputting the signal light for which the compensation is made to said collimating means (21), and for causing the signal light for which the compensation is made to be output from a second optical input/output path (12b) comprised by said collimating means (21).
